(19) Europäisches Patentamt
European Patent Office
Office européen des brevets

(11) **EP 1 129 349 B1**

(12) **EUROPEAN PATENT SPECIFICATION**

(45) Date of publication and mention
of the grant of the patent:
**19.03.2003 Bulletin 2003/12**

(21) Application number: **98956699.7**

(22) Date of filing: **10.11.1998**

(51) Int Cl.⁷: $G01N\ 33/44$, G01N 3/16

(86) International application number:
**PCT/US98/24003**

(87) International publication number:
**WO 00/028321 (18.05.2000 Gazette 2000/20)**

(54) **DUAL WINDUP EXTENSIONAL RHEOMETER**

AUSDEHNUNGSRHEOMETER MIT DOPPELTER AUFWICKLUNG

RHEOMETRE DOUBLE ENROULEMENT DE MESURE D'EXTENSION

(84) Designated Contracting States:
**DE FR GB IT**

(43) Date of publication of application:
**05.09.2001 Bulletin 2001/36**

(73) Proprietor: **THE GOODYEAR TIRE & RUBBER COMPANY**
**Akron, Ohio 44316-0001 (US)**

(72) Inventor: **SENTMANAT, Martin, Lamar**
**Akron, OH 44303 (US)**

(74) Representative: **Leitz, Paul et al**
**Goodyear Technical Center,**
**Patent Department,**
**Avenue Gordon Smith**
**7750 Colmar-Berg (LU)**

(56) References cited:
- **MEISSNER J ET AL: "ROTARY CLAMP IN UNIAXIAL AND BIAXIAL EXTENSIONAL RHEOMETRY OF POLYMER MELTS" J RHEOL FEB 1981, vol. 25, no. 1, February 1981, pages 1-28, XP002107638 cited in the application**
- **MEISSNER J ET AL: "A new elongational rheometer for polymer melts and other highly viscoelastic liquids" RHEOLOGICA ACTA, JAN.-FEB. 1994, GERMANY, vol. 33, no. 1, pages 1-21, XP002107639 ISSN 0035-4511 cited in the application**
- **PATENT ABSTRACTS OF JAPAN vol. 005, no. 026 (P-049), 17 February 1981 -& JP 55 152436 A (SHINMEIWA KOGEI KK), 27 November 1980**
- **KUKSENKO V S ET AL: "STRENGTH AND OPERATING LIFETIME OF OPTICAL FIBERS" TECHNICAL PHYSICS LETTERS, vol. 19, no. 1, 1 January 1993, pages 58-59, XP000381433**

## Description

## Technical Field

The invention relates to a rheometer or rheometer attachment which is used to measure the viscosity and stress relaxation of polymers, elastomers, and rubber compounds in simple extension.

## Background Art

Joachim Meissner, in the review article "Polymer Melt Elongation-Methods, Results, and Recent Developments" in Polymer Engineering and Science, April 1987, Vol. 27, No. 8, pp. 537-546 describes different extensional rheometers that have been developed in the prior art. Meissner is also the author of several patents on the subject including U.S. 3,640,127, dated February 8, 1972, German 2138504, dated 02 August 1971, German 2243816, dated 07 September 1972 and U.K. 1287367.

Extensional rheometer designs by Cogswell, Vinogradov, and later Münstedt had in common that one end of the polymer fiber or filament that was used for testing was fixed to a load cell/indicator, while the other end was stretched by mechanical means to a finite maximum elongation. Accordingly, these rheometers operated with a non-uniform extensional rate throughout the sample particularly near the clamped ends of the fiber. Meissner overcame these difficulties with his dual rotary clamp design in which rotary clamps stretched the fiber at either end over a fixed gauged length. See, for example, "Rotary Clamp and Uniaxial and Biaxial Extensional Rheometry of Polymer Melts" by J Meissner, et al., Journal of Rheology, Vol. 25, pp .1-28 (1981) and "Development of a Universal Extensional Rheometer for the Uniaxial Extension of Polymer Melts", by J Meissner, Transactions of the Society of Rheology, Vol. 16, No. 3, pp. 405-420 (1972). In a further development of this type of rheometer, in order to improve the transfer of the circumferential speed of the clamps to the local speed of the sample at the location of clamping (strain rate lag), two rotary clamps in the prior art devices were replaced by Meissner and Hostettler as illustrated in "A New Elongational Rheometer for Polymer Melts and other Highly Viscoelastic Liquids", Rheological Acta, Vol. 33, pp. 1-21 (1994) with matched/grooved, metal conveyor belts. With this design, however, a measurement was limited to a single rotation of the clamps corresponding to a Hencky strain of seven, and the maximum extensional rate was limited to 1/s (a reciprocal second). The extensional viscosity was determined from the force required to deform the fiber, which was measured by the deflection of leaf springs supporting one set of rotating clamps.

Other techniques used to measure extensional viscosity involved winding one end of a fiber around a drum and measuring the resultant stretching force at the other fixed end of the fiber, as illustrated in U.S. 3,693,425 (1972) by J M Starita et al. Like the earlier designs, this method imparted a non-uniform extensional deformation to the free gauge length of the stretched fiber, particularly at the fixed end of the fiber. Further, the windup was uncontrolled and precautions had to be taken to ensure that windup did not take place over a portion of previously wound fiber.

## Disclosure of the Invention.

An apparatus for measuring the rate of extensional flow of low modulus solids comprises; (a) a drive shaft mounted in an armature, the armature being connected to a torque shaft, and (b) two rotatable drums in proximity to one another, wherein a first drum is mounted in the armature substantially in alignment with the torque and drive shafts, and a second drum is adjacent thereto.

In the illustrated embodiment, the first and second drums are in substantially parallel alignment, are mounted on bearings, and may have associated therewith means for directing the windup of a sample on the drums. The drums may be geared to be counter rotating or co-rotating. In the illustrated embodiment, the drums are geared such that the drums rotate at the same speed.

Also provided is a method for measuring the rate of flow of low modulus solids comprising the steps of, a) providing an apparatus for measuring the rate of extensional flow of low modulus solids comprising a drive shaft mounted in an armature wherein the armature is further connected to a torque shaft, two rotatable drums in proximity to one another wherein the first drum is mounted in the armature substantially in alignment with the torque and drive shafts and the second drum is adjacent thereto, b) fixing a sample to both drums, one end of said sample being attached to each drum, c) causing the two ends of the sample to be pulled away from each other by rotation of the drums, and d) measuring the torque created in the torque shaft by the drawing of the sample.

The method may further comprise the steps of measuring the maximum torque achieved by the sample and measuring the lapsed time from the start of the measurement to the breaking of the sample. In the illustrated embodiment of the method, the two rotatable drums are mounted substantially in parallel alignment on bearings, and the drums have associated therewith means for directing the windup of a sample on the drums.

In one embodiment, the dual windup threaded drum extensional rheometer illustrated, makes possible the windup of each end of a fiber and imparts a uniform extensional deformation to the unsupported pre gauge length of the fiber, and allows for large extensional deformations by allowing multiple drum rotations with a threaded drum design.

The rheometer provides a simple design and method to measure the extensional flow properties of polymers, elastomers and compounds. The rheometer of the invention can be attached to any commercially available rotational rheometer, and can be made small enough to fit within the environmental chamber of a rotational rheometer in order to measure extensional flow properties as a function of temperature. The invention may also be part of, or be incorporated into a new type of rheometer. The apparatus can also be used to measure the extensional properties of viscoelastic solids.

**Brief Description of Drawings**

Fig. 1 illustrates a side view of the apparatus of the invention illustrating the armature and two parallel rotating drums.

Fig. 2 illustrates the apparatus of Fig. 1 rotated 90 degrees.

Fig. 3 illustrates an enlarged view of the armature and the rotation drums.

Fig. 4 illustrates the apparatus of Fig. 3 rotated 90 degrees.

Fig. 5, Fig. 6 and Fig. 6A illustrate the apparatus of the invention contained in an environmental chamber, wherein Fig. 6A illustrates a top of view of an alternative embodiment of the apparatus where the drums are co-rotating.

Fig. 7, Fig. 8 and Fig. 8A illustrate an alternative embodiment of the apparatus of the invention.

Fig. 9 is a graphic illustration of the top view of the primary and secondary drums as a sample is stretched.

**Detailed Description of the Invention**

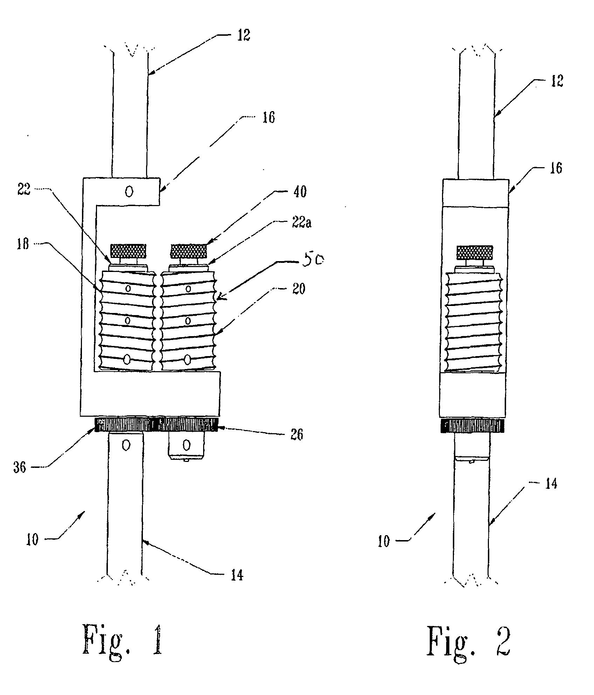

With reference now to Figs. 1-4, the apparatus 10 comprises a drive shaft 14, which is mounted on bearings 28 that are attached to armature 16, armature 16 further being attached to torque shaft 12. Mounted within armature 16 are primary windup drum 18 and secondary windup drum 20.

Although primary windup drum 18 and secondary windup drum 20 are illustrated as being mounted parallel to one another and directly adjacent to one another, those skilled in the art will recognize that said drums can be mounted at different angles relative to one another, and different angles relative to the torque and drive shafts. Such angular mounting may affect how calculations are done in determining results, but would not affect the results achieved by the apparatus.

In the illustrated embodiment, primary windup drum 18 is illustrated as being in direct alignment with drive shaft 14 and torque shaft 12. Those skilled in the art will recognize that this alignment is not necessary for operation of the apparatus, but is preferred to make construction easier and simplify the calculations of torque.

Each of the windup drums 18,20 have associated therewith means for securing a filament to the drum as required to carry out the measurements desired. In the illustrated embodiment the securing means is filament securing clamp 22.

Windup drums 18,20 are mounted on armature 16 through ball bearings 28 and are further connected to gears 36 and 26 respectively. Drive shaft 14 turns gear 36, gear 36 turns gear 26 which causes rotation of secondary windup drum 20. The resistance provided by the stretched sample to the turning of secondary windup drum 20 imparts a force to the intermeshing gears 36 and 26, which in turn imparts a force to armature 16. This force tends to turn the armature in a direction opposite the direction of rotation of secondary windup drum 20, wherein the tendency of the armature to turn creates a torque in torque shaft 12 that can be measured.

In the operation of the apparatus of the invention, the ends of a fiber sample are secured to the windup drums, and constant rotation of the drums imparts, a constant uniform extensional deformation rate to the unsupported pre gauge length of the fiber. The extensional deformation of the fiber offers a resistance to deformation which is related to the extensional viscosity of the sample, which in turn offers a resistance to the drum rotation in the form of a resultant torque on the torque armature. By measuring the resultant torque on the armature, the extensional viscosity of the fiber may be calculated for a given extensional deformation rate and temperature.

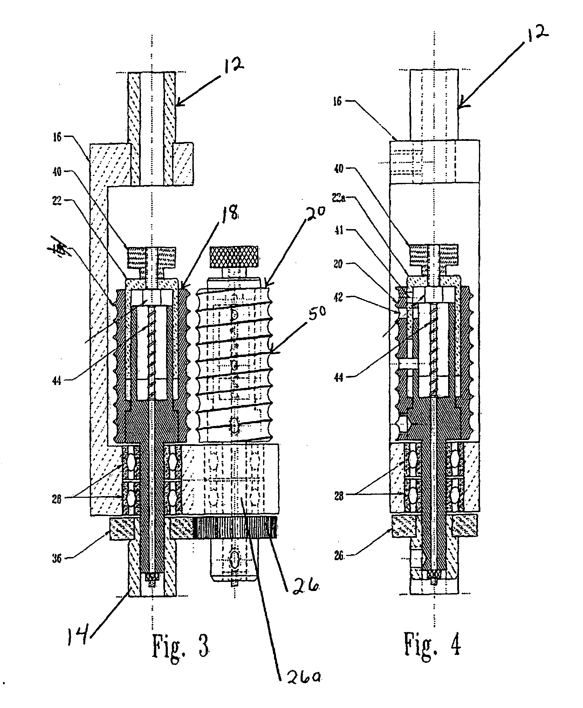

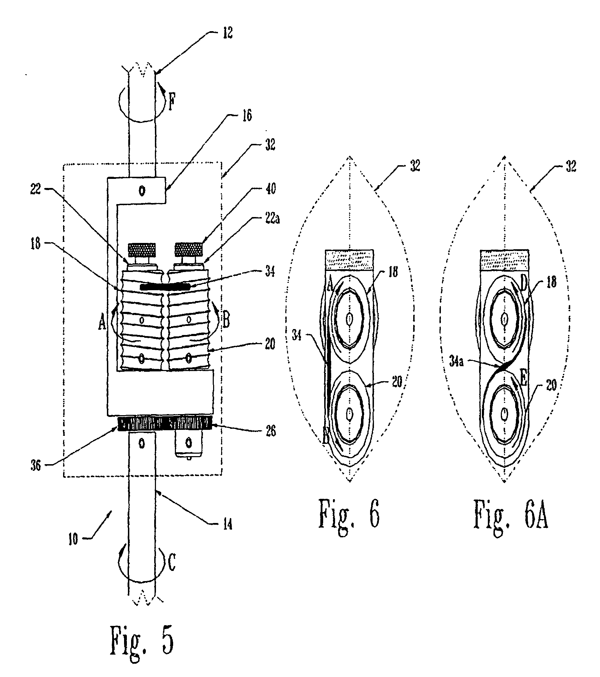

With reference specifically to Figs. 3 and 4, in an enlarged view of the apparatus, details of the construction of the apparatus can be seen. To those skilled in the mechanical art, other mechanical embodiments of the inventive concepts described herein will be readily apparent.

The same type of filament securing clamp 22 is used with both primary windup drum 18 and secondary windup drum 20. Accordingly, filament securing clamp 22 for primary windup drum 18 is illustrative for the method used to secure a filament to both drums in the illustrated embodiment. Filament securing clamp 22 has associated therewith a filament securing clamp knob 40 which is used by the operator to secure a filament 34 or 34A (see Figs. 5 and 6A) to a windup drum 18,20. By depressing the securing clamp knob 40, the guide hole 41 in the filament securing clamp 22 aligns with the guide hole 42 of the windup drum (see Fig. 4) and the filament 34, 34A is threaded through said aligned holes 41 and 42. Releasing the clamp knob 40 relieves the securing clamp compression spring 44 causing the edge of the filament securing clamp guide hole 41 to bear against the filament 34,34A, thus securing the filament in said windup drum guide hole 42.

Filament guide means are used to control the manner in which the filament is wound up on the drums, and in the illustrated embodiment the filament guide means is provided by the helical threading 50 on the drums. Thus, in operation, when the windup drums 18,20 are turned, the filament is guided into the helical threads on the drums so that there is no overlap of the filament and there is no distortion in the extensional measurements.

With reference now to Figs. 5, 6 and 6A, the apparatus is illustrated as being contained within an environmental chamber 32 which can be used to heat or cool the sample as desired. In the operation of the apparatus, after a filament is secured to primary windup drum 18 and secondary windup drum 20, drive shaft 14 is rotated in the direction of arrow C, which causes primary windup drum 18 to rotate in the direction of arrow A. Since, in the embodiment illustrated in Fig. 5, gear 36 and gear 26 are intermeshing, turning of gear 36 causes secondary windup drum 20 to rotate the opposite direction, i.e., in the direction of arrow B. When filament 34 is secured to primary windup drum 18 and secondary drum 20 as illustrated in Fig. 5, the counter rotation of drums 18,20 cause filament 34 to be stretched. As filament 34 is stretched, its resistance to the turning of drums 18 and 20 increases, wherein the resistance of the filament is transferred to secondary windup drum 20 which has a tendency to turn armature 16 in the opposite direction, thereby creating a resultant torque on torque shaft 12 in the direction of arrow F.

The apparatus is designed so that torque shaft 12 does not actually move, but a torque on torque shaft 12 activates a force rebalance transducer which, through a closed feedback loop in the apparatus, develops a current which tends to counteract the torque imposed on torque shaft 12 by the secondary windup drum, and the current required to counteract this torque is measured, thereby measuring the torque created. Such force rebalance transducers are well known to those skilled in the art.

Other techniques of measuring torque are known to those skilled in the art, and such other techniques can be used with the apparatus of the invention.

Environmental chamber 32 is designed to measure the rheology of samples from -70 degrees centigrade to 300 degrees centigrade. Measurements at lower temperatures are designed to measure extensional rheology as it relates to the $T_g$ (glass transition) of the sample, and the extensional flow of the materials at higher temperatures is related to the melt/viscosity of the sample. Environmental chamber 32 can be in the form of an oven or an oil bath, or any other means known to those skilled in the art for controlling the physical state of a sample.

An embodiment is illustrated in Fig. 6A wherein the primary windup drum 18 and the secondary windup drum 20 are co-rotational. Co-rotation of drums 18 and 20 can be achieved simply by adding an additional gear (not shown) between spur gears 26 and 36. When co-rotational primary windup drums 18 and second windup drums 20 are used, the sample filament 34A will be attached to the drums as illustrated in Fig. 6A i.e., between the drums. The resultant torque in such an embodiment will be opposite the resultant torque illustrated in Fig. 5. The same principles of operation as described with respect to an apparatus with counter rotating drums apply.

With reference again to Fig. 5, a sample 34 in its original state has a relatively substantial thickness as represented by the thick line in the drawing. After the secondary and the primary windup drums have been rotated, the sample is stretched over the diameter of the drums, and accordingly, its cross-sectional thickness is substantially reduced. It is the resistance of the material to stretch, and continued stretching that creates a force on the armature, which transmits a torque to torque shaft 12.

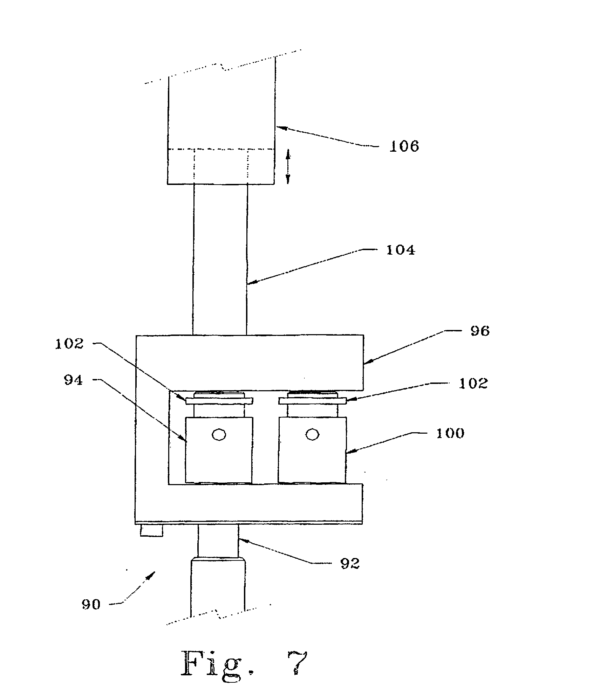

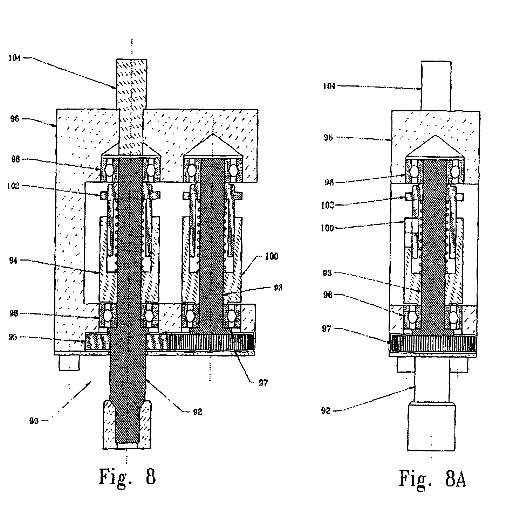

With reference now to Figs. 7, 8, and 8A, in an alternative embodiment, primary drum 94 and secondary drum 100 of apparatus 90 of the invention can be made smooth, without sample guiding means since many samples are not long enough to survive one rotation of the drums. The securing clamp 102 of each drum can be spring-loaded and fashioned to slide up and down primary drive shaft 92 and secondary shaft 93 of the apparatus during fiber loading and unloading. Also, the torque armature 96 can be made to house intermeshing gears 95 and 97 and to support the ends of the primary and secondary shafts of the apparatus with radial ball bearings 98, rather than having the shafts cantilevered as in the embodiment earlier described.

When the invention is used as a fixture on a commercial rotational rheometer in which one of the fixture adapters is affixed to a reciprocating, movable stage, a miniature telescoping ball spline 106 can be incorporated onto the torque shaft 104. This telescoping ball spline ensures the translation of torque, but not compressive loads, to the torque transducer. Such telescoping ball spines are available from Sterling Instruments, as illustrated in the Handbook of Shafts, Bearings and Couplings, (1995) p. 4-9. The alternative embodiment of the apparatus 90 functions in the same manner described above with respect to apparatus 10.

The invention is further illustrated with reference to the following example.

Example 1

The apparatus shown in Figs. 1-5 is used for illustrative purposes in this example.

Both ends of an uncured polymer filament 34 are secured by the spring-loaded fiber securing clamps of the equal diameter windup drums 18,20 of the extensional rheometer 10. A motor rotating at a fixed rotational rate drives the primary windup drum 18 and a fine toothed spur gear 36 on the same shaft 14. This spur gear 36 intermeshes with a similar spur gear 26 on the shaft 26a connected to the secondary windup drum 20.

Since both spur gears are similar, motion of the primary drum 18 drives an equal but opposite rotation of the secondary drum 20. The shafts of both drums are affixed with precision radial ball bearings 28 housed in the torque armature 16. The constant rotational speed ($\Omega$) of the drums of equal radius ($R$) imparts a constant, uniform extensional deformation rate ($\dot{\varepsilon}$) to the unsupported length ($L$) of the fiber 34 such that:

$$\dot{\varepsilon} = 2\Omega R/L$$

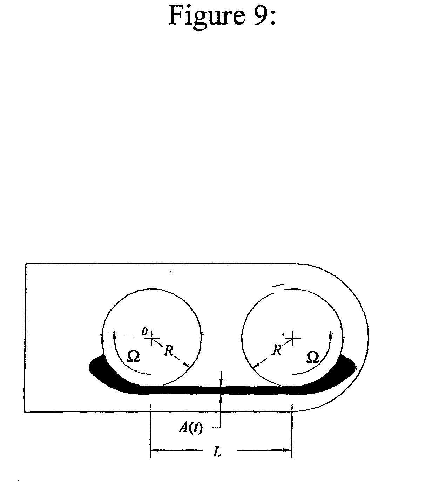

as illustrated graphically in Fig. 9.

The extension of the fiber offers a resistance to deformation due to the extensional viscosity $\eta_E(t)$ of the fiber, which in turn offers a resistance to the drum rotation in the form of torque $T_E$. The extensional viscosity of the fiber can be expressed in the following relationship:

$$\eta_E(t) = \sigma_E(t)/\dot{\varepsilon} = F_E(t)/A(t)/\dot{\varepsilon}$$

where $\sigma_E(t)$ is the instantaneous extensional stress in the unsupported fiber, $F_E(t)$ is the instantaneous force required to stretch the unsupported fiber, and $A(t)$ is the instantaneous cross-sectional area of unsupported fiber. The resultant torque acting on the drums may then be expressed as:

$$T_E(t) = F_E(t)\,2R$$

Both of these expressions may be combined to yield:

$$\eta_E(t) = T_E(t)/(2R\,\dot{\varepsilon}\,A(t))$$

By measuring the resultant torque on the armature, the extensional viscosity of the fiber may be calculated for a given extensional deformation rate and temperature.

$T_E$ can be resolved by a summation of torques about point 0 from Fig. 9. Thus, the resistance of the fiber to extend imparts a torque on the gear teeth which in turn imparts a resultant torque, $T_R$, on the torque armature. Since the bearings and intermeshing gears also offer resistance to rotation, a summation of torques yields:

$$\Sigma T_0 = 0 = T_R - T_E - T_{Gears} - T_{Bearings} = T_R - T_E - T_{Friction}$$

Thus, the above expression for $\eta_E(t)$ can be rewritten as:

$$\eta_E(t) = (T_R(t) - T_{Friction})/(2R\,\dot{\varepsilon}\,A(t))$$

where $T_R(t)$ is the resultant torque measured on the torque armature shaft by the torque transducer as a function of time, and $T_{Friction}$ is the torque losses from the bearings and gears which can be determined from calibration.

Now for a fiber in simple extension, $A(t)$ can be expressed as:

$$A(t) = A_O \exp(-\dot{\varepsilon}\,t)$$

where $A_O$ is the original cross-sectional area prior to fiber extension. Substituting the initial expression for $\dot{\varepsilon}$, $A(t)$ can be rewritten as:

$$A(t) = A_O \exp (-2\Omega R\, t)/L$$

Since $\Omega = d(\theta(t))/dt$ where $\theta(t)$ is the angular rotation of the primary windup drum as a function of time, then for a constant rotational drum speed, $\Omega$ may be expressed as:

$$\Omega = (\theta_2 - \theta_1)/(t_2 - t_1)$$

If it is assumed that $\theta_1 = 0$ at $t_1 = 0$ and that a constant rotational speed is achieved instantaneously then the expression for $\Omega$ simplifies to:

$$\Omega = \theta_2/t_2 = \theta(t)/t$$

Assuming no-slip of the fiber on the drum, the above expression can be substituted into the expression for $A(t)$ and the following can be obtained:

$$A(t) = A_O \exp(-2\theta(t)R\, t)/(tL) = A_O \exp(-2\theta(t)R)/\, L$$

Thus, the resulting expression for the instantaneous cross-sectional area of the fiber sample is only a function of the angular rotation of the primary windup drum at a given time, $t$. Beyond the realm of validity of the aforementioned assumptions, however, more rigorous empirical methods for determining instantaneous fiber cross-sectional area should be applied and are well known to those skilled in the art.

Note that each windup drum can be threaded to allow for fiber alignment and multiple drum rotations to allow for very large Hencky strains. In doing so, however, the increased extensional deformation per drum revolution must be accounted for in the expression for extensional deformation rate, $\varepsilon$. In addition, a non-circumferential force component must be accounted for in the torque measurement, $T_R(t)$.

While the invention has been specifically illustrated and described, those skilled in the art will recognize that the invention may be variously modified and practiced without departing from the concepts of the invention. The scope of the invention is limited only by the following claims.

**Claims**

1. An apparatus for measuring the rate of extensional flow of low modulus solids comprising

    (a) a drive shaft mounted in an armature wherein the armature is further connected to a torque shaft
    (b) two rotatable drums in proximity to one another, wherein a first said drum is mounted in said armature substantially in alignment with said torque and drive shafts, and a second said drum is adjacent thereto.

2. The apparatus of claim 1 wherein said first and second drums are in substantially parallel alignment, are mounted on bearings, and have associated therewith means for directing the windup of a sample on said drums.

3. The apparatus of claim 2 wherein the means for directing the windup of a sample is helical threading on each of said drums.

4. The apparatus of claim 1 wherein said drums are geared to be counter rotating.

5. The apparatus of claim 4 wherein the means for directing the windup of a sample is helical threading on each of said drums.

6. The apparatus of claim 3 wherein each said drum is geared and said gears intermesh such that said first and second drums rotate at the same speed.

7. The apparatus of claim 1 wherein each said drum has securing means for securing a sample thereto.

**8.** The apparatus of claim 1 wherein the apparatus comprises an attachment which is adapted to be attached to a rheometer.

**9.** A method for measuring the rate of flow of low modulus solids comprising the steps of

(a) providing an apparatus for measuring the rate of extensional flow of low modulus solids comprising, a drive shaft mounted in an armature wherein the armature is further connected to a torque shaft, and mounted in the armature are two rotatable drums in proximity to one another, wherein a first said drum is mounted in said armature substantially in alignment with said torque and drive shafts, and a second said drum is adjacent thereto
(b) fixing a sample to both said drums, one end of said sample being attached to each said drum
(c) causing the two ends of the sample to be pulled away from each other by rotation of the drums, and
(d) measuring the torque created in the torque shaft by the drawing of the sample.

**10.** The method of claim 9 which comprises the further steps of

(a) measuring the maximum torque achieved by the sample, and
(b) measuring the time elapsed from the start of the measurement to breaking of the sample.

**11.** The method of claim 9 which comprises the further steps of disposing said first and second drums in substantially parallel alignment, mounting said drums on bearings, and associating therewith means for directing the: windup of a sample on said drums.

**12.** The method of claim 9 which comprises the further step of gearing said drums to be counter rotating.

**13.** The method of claim 9 which comprises the further step of providing each said drum with gearing and causing said gears to intermesh such that said first and second drums rotate at the same speed.

**14.** The method of claim 9 which comprises the further step of providing each said drum with securing means for securing a sample thereto.

**Patentansprüche**

**1.** Vorrichtung zum Messen der Fließgeschwindigkeit bei Dehnung von Festkörpern mit niedrigem Modul, die umfasst:

(a) eine in einer Armatur angebrachte Antriebswelle, wobei die Armatur ferner mit einer Verdrehwelle verbunden ist,
(b) zwei nahe beieinander liegende drehbare Trommeln, wovon eine erste in der Armatur im Wesentlichen ausgerichtet auf die Verdreh- und Antriebswellen angebracht ist und eine zweite dazu benachbart ist.

**2.** Vorrichtung nach Anspruch 1, wobei die erste Trommel und die zweite Trommel im Wesentlichen parallel aufeinander ausgerichtet sind, in Lager gefasst sind und ihnen zugeordnete Mittel zum Lenken des Aufwickelns einer Probe auf die Trommeln besitzen.

**3.** Vorrichtung nach Anspruch 2, wobei die Mittel zum Lenken des Aufwickeins einer Probe aus einem schraubenförmigen Gewinde auf jeder der Trommeln bestehen.

**4.** Vorrichtung nach Anspruch 1, wobei die Trommeln über ein Getriebe so verbunden sind, dass sie sich gegensinnig drehen.

**5.** Vorrichtung nach Anspruch 4, wobei die Mittel zum Lenken des Aufwickelns einer Probe aus einem schraubenförmigen Gewinde auf jeder der Trommeln bestehen.

**6.** Vorrichtung nach Anspruch 3, wobei jede der Trommeln mit einem Zahnrad versehen ist, wobei die Zahnräder so ineinander greifen, dass sich die erste und die zweite Trommel mit gleicher Geschwindigkeit drehen.

**7.** Vorrichtung nach Anspruch 1, wobei jede der Trommeln Befestigungsmittel zum Befestigen einer Probe daran aufweist.

**8.** Vorrichtung nach Anspruch 1, wobei die Vorrichtung ein Vorsatzgerät umfasst, das an einem Rheometer angebracht werden kann.

**9.** Verfahren zum Messen der Fließgeschwindigkeit bei Dehnung von Festkörpern mit niedrigem Modul, das die folgenden Schritte umfasst:

(a) Vorsehen einer Vorrichtung zum Messen der Fließgeschwindigkeit von Festkörpern mit niedrigem Modul, die eine in einer Armatur angebrachte Antriebswelle umfasst, wobei die Armatur ferner mit einer Verdrehwelle verbunden ist und in der Armatur zwei nahe beieinander liegende drehbare Trommeln angebracht sind, wovon eine erste in der Armatur im Wesentlichen ausgerichtet auf die Verdrehund Antriebswellen angebracht ist und eine zweite dazu benachbart ist,
(b) Befestigen einer Probe an beiden Trommeln, wobei an jeder Trommel jeweils ein Ende der Probe angebracht wird,
(c) Veranlassen, dass die beiden Enden der Probe durch Drehung der Trommeln auseinandergezogen werden, und
(d) Messen des durch das Ziehen der Probe in der Verdrehwelle erzeugten Drehmoments.

**10.** Verfahren nach Anspruch 9, das die weiteren Schritte umfasst:

(a) Messen des von der Probe erzielten maximalen Drehmoments und
(b) Messen der zwischen dem Beginn der Messung und dem Brechen der Probe verstrichenen Zeit.

**11.** Verfahren nach Anspruch 9, das die folgenden weiteren Schritte umfasst: Anordnen der ersten und der zweiten Trommel in im Wesentlichen paralleler Ausrichtung, Anbringen der Trommeln in Lagern und Zuordnen von Mitteln zum Lenken des Aufwickelns einer Probe auf die Trommeln.

**12.** Verfahren nach Anspruch 9, das den weiteren Schritt umfasst: Verbinden der Trommeln über ein Getriebe, derart, dass sie sich gegensinnig drehen.

**13.** Verfahren nach Anspruch 9, das die folgenden weiteren Schritte umfasst: Versehen jeder Trommel mit einem Zahnrad und Veranlassen, dass die Zahnräder so ineinander greifen, dass sich die erste und die zweite Trommel mit gleicher Geschwindigkeit drehen.

**14.** Verfahren nach Anspruch 9, das den folgenden weiteren Schritt umfasst: Versehen jeder Trommel mit Befestigungsmitteln, um daran eine Probe zu befestigen.

**Revendications**

**1.** Appareil pour mesurer le taux de fluage par extension de solides à faible module d'élasticité, comprenant

(a) un arbre d'entraînement monté dans un induit, dans lequel l'induit est en outre relié à un arbre de torsion ;
(b) deux tambours rotatifs à proximité l'un de l'autre, dans lequel le premier desdits tambours est monté dans ledit induit essentiellement en alignement avec lesdits arbres de torsion et d'entraînement, et ledit deuxième tambour est disposé en position adjacente au premier.

**2.** Appareil selon la revendication 1, dans lequel lesdits premier et deuxième tambours sont disposés en alignement essentiellement parallèle, sont montés sur des paliers et possèdent des moyens associés à ces derniers pour diriger l'enroulement d'un échantillon sur lesdits tambours.

**3.** Appareil selon la revendication 2, dans lequel le moyen pour diriger l'enroulement d'un échantillon est un filet de vis hélicoïdal sur chacun desdits tambours.

**4.** Appareil selon la revendication 1, dans lequel lesdits tambours sont commandés pour tourner dans des directions opposées.

**5.** Appareil selon la revendication 4, dans lequel les moyens pour diriger l'enroulement d'un échantillon est un filet de vis hélicoïdal sur chacun desdits tambours.

**6.** Appareil selon la revendication 3, dans lequel ledit tambour est commandé et lesdits mécanismes de commande sont engrenés de telle sorte que lesdits premier et deuxième tambours tournent à la même vitesse.

**7.** Appareil selon la revendication 1, dans, lequel chacun desdits tambours possède des moyens de fixation pour pouvoir y fixer un échantillon.

**8.** Appareil selon la revendication 1, dans lequel l'appareil comprend une fixation qui est conçue pour être fixée à un rhéomètre.

**9.** Procédé pour mesurer le taux de fluage par extension de solides à faible module d'élasticité, comprenant les étapes consistant à

(a) procurer un appareil pour mesurer le taux de fluage par extension de solides à faible module d'élasticité comprenant un arbre d'entraînement monté dans un induit, dans lequel l'induit est en outre relié à un arbre de torsion, deux tambours rotatifs étant en outre montés dans l'induit à proximité l'un de l'autre, dans lequel le premier desdits tambours est monté dans ledit induit essentiellement en alignement avec lesdits arbres de torsion et d'entraînement, et ledit deuxième tambour est disposé en position adjacente au premier ;
(b) fixer à un échantillon auxdits deux tambours, une extrémité dudit échantillon étant fixée à chacun desdits tambours ;
(c) faire en sorte d'écarter par traction les deux extrémités de l'échantillon l'une de l'autre via la rotation des tambours, et
(d) mesurer la torsion générée dans l'arbre de torsion par l'étirement de l'échantillon.

**10.** Procédé selon la revendication 9, qui comprend les étapes supplémentaires consistant à

(a) mesurer la torsion maximale que l'on obtient avec l'échantillon ; et
(b) mesurer le temps écoulé depuis le début de mesurer jusqu'à la rupture de l'échantillon.

**11.** Procédé selon la revendication 9, qui comprend les étapes supplémentaires consistant à disposer lesdits premier et deuxième tambours en alignement essentiellement parallèle, à monter lesdits tambours sur des paliers, et à associer à ces derniers des moyens pour diriger l'enroulement d'un échantillon sur lesdits tambours.

**12.** Procédé selon la revendication 9, qui comprend les étapes supplémentaires consistant à commander lesdits tambours pour qu'ils tournent dans des directions opposées.

**13.** Procédé selon la revendication 9, qui comprend les étapes supplémentaires consistant à munir chacun desdits tambours d'un mécanisme de commande et à faire en sorte que lesdits mécanismes de commande s'engrènent de telle sorte que lesdits premier et deuxième tambours tournent à la même vitesse.

**14.** Procédé selon la revendication 9, qui comprend l'étape supplémentaire consistant à munir chacun desdits tambours de moyens de fixation pour y fixer un échantillon.

Fig. 1

Fig. 2

Fig. 3

Fig. 4

Fig. 5

Fig. 6

Fig. 6A

Fig. 7

Fig. 8

Fig. 8A

# Figure 9: